# EUROPEAN PATENT APPLICATION

(11) **EP 3 156 431 A1**
(43) Date of publication of application: **19.04.2017**
(21) Application number: 15806016.0
(22) Date of filing: 12.06.2015
(51) Int. Cl.: C08G 18/66, A47C 27/14, B29C 39/02, B29C 43/02, B29C 43/34, C08G 18/76, B29K 75/00, B29K 105/04, B29L 31/58, C08G 101/00

(54) **SOFT POLYURETHANE FOAM AND PAD FOR SEAT**

(30) Priority: 12.06.2014 JP 2014121918
(71) Applicant: Bridgestone Corporation, Tokyo 104-8340 (JP)
(72) Inventor: YOSHITOMI Kosuke, Tokyo 104-8340 (JP); SHINOHARA Toshimitsu, Tokyo 104-8340 (JP)
(74) Representative: Oxley, Robin John George
(86) International application number: PCT/JP2015/067011
(87) International publication number: WO 2015/190595

(57) **Abstract**

The present invention provides a soft polyurethane foam that is obtained by foam molding a foaming stock solution containing a polyol, a polyisocyanate, a cross-linking agent, a foaming agent, and a catalyst in which: a polyether polyol having a weight-average molecular weight (Mw) of 3,000 to 12,000 and having three to four functional groups is contained; a molar ratio of ethylene oxide groups/propylene oxide groups in all the compound contained as the cross-linking agent is 100 or more; and diphenylmethane diisocyanate is contained in an isocyanate equivalent of 70 or more.

## Description

### [Technical Field]

The present invention relates to a soft polyurethane foam used in various molded items such as automobile parts and indoor household goods and a seat pad (a seat cushion material) using the soft polyurethane foam.

Priority is claimed on Japanese Patent Application No. 2014-121918, filed June 12, 2014, the content of which is incorporated herein by reference.

### [Background Art]

Soft polyurethane foams are used in various applications, for example, seat pads of vehicles such as automobiles, indoor chairs, cushion materials such as bedding and house floor cushioning materials. Various mechanical characteristics are necessary depending on applications and seating comfort is required for automobile seat pads.

Applicants proposed a polyurethane foam of Patent Document 1 as a lightweight polyurethane foam having a moderate repulsive force and an excellent vibration absorption property. The polyurethane foam is a polyurethane foam that is obtained by foam molding a polyurethane foaming stock solution containing a polyol component and an isocyanate component, and uses a polyether polyol whose molecular weight, degree of unsaturation and molecular weight/the number of functional groups are defined in specific ranges as a main component and into which an inorganic filling material having undergone an organic treatment is additionally blended.

### [Document of Related Art]

### [Patent Document]

### [Patent Document 1]

Japanese Unexamined Patent Application, First Publication No. 2008-127514.

### [Summary of Invention]

### [Technical Problem]

In recent years, in seat pads of vehicles, comfort and a feeling of stability in seating have been demanded even more strongly. For example, when G (acceleration in a centrifugal direction) in a lateral direction generated when an automobile runs along a gentle curve or changes lanes while running is applied to a passenger, it is necessary to decrease a feeling of shakiness (a sensation of a horizontal deviation) by sufficiently supporting at least the passenger's buttocks between the buttocks and the back.

In view of the above-circumstances, an object of the present invention is to provide a seat pad having seating comfort and a reliable feeling of stability and a soft polyurethane foam that can be used to implement the seat pad.

### [Solution to Problem]

[1] A soft polyurethane foam that is obtained by foam molding a foaming stock solution containing a polyol, a polyisocyanate, a cross-linking agent, a foaming agent, and a catalyst. In the soft polyurethane foam, a polyether polyol whose weight-average molecular weight (Mw) is 3,000 to 12,000 and whose number of functional groups is 3 to 4 is contained as the polyol, a molar ratio of ethylene oxide groups/propylene oxide groups in all the compound contained as the cross-linking agent is 100 or more, and diphenylmethane diisocyanate is contained in an isocyanate equivalent of 70 or more as the polyisocyanate.

### [Effects of Invention]

A foaming stock solution that forms a soft polyurethane foam of the present invention includes a novel composition. As a result, a feeling of shakiness when a moderate repulsive force in seating and an acceleration in a lateral direction is applied decreases, and therefore seating comfort and a feeling of stability that are different from those of the related art can be obtained.

### [Brief Description of Drawings]

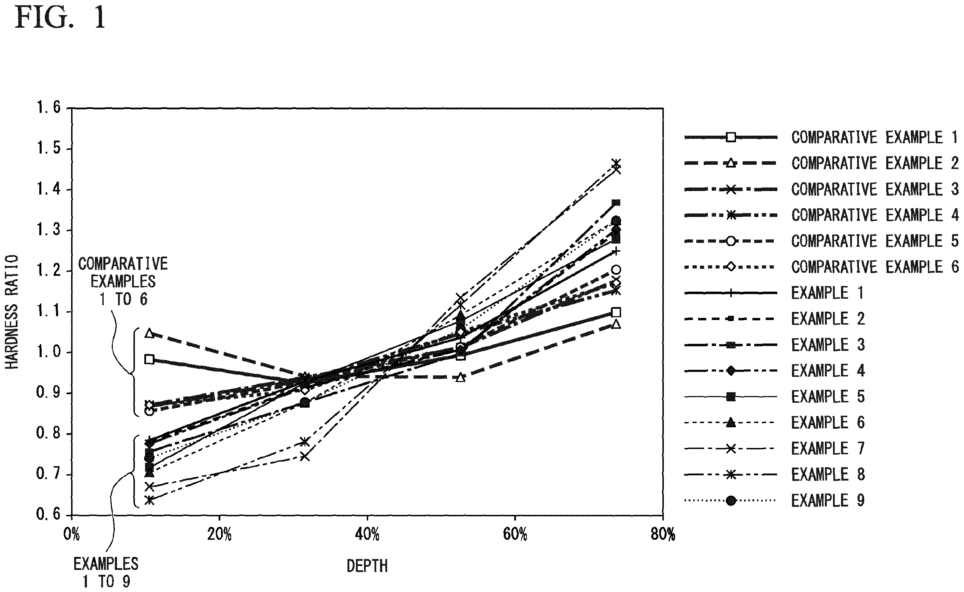

Fig. 1 shows graphs of stiffness distributions in a thickness direction of produced soft polyurethane foams.

### [Description of Embodiments]

Hereinafter, the present invention will be described with reference to the drawings based on an exemplary embodiment although the present invention is not limited to the embodiment.

The exemplary embodiment of a soft polyurethane foam of the present invention is a soft polyurethane foam that is obtained by foam molding a foaming stock solution containing a polyol, a polyisocyanate, a cross-linking agent, a foaming agent, and a catalyst. Materials of the foaming stock solution have the following features (A) to (D).

(A) As a polyol component, a polyether polyol whose weight-average molecular weight (Mw) is 3,000 to 12,000 and whose number of functional groups (number of hydroxyl groups) is 3 to 4 is contained.
(B) A molar ratio of ethylene oxide groups/propylene oxide groups in all the compound (total cross-linking agent) contained in a foaming stock solution as a cross-linking agent component is 100 or more.
(C) A molar ratio of ethylene oxide groups/propylene oxide groups in all the compound contained as a communicating agent is 2 or more.
(D) As a polyisocyanate, diphenylmethane diisocyanate (MDI) is contained in an isocyanate equivalent of 70 or more.

### <Polyol component>

As a polyol component of the foaming stock solution, a polyether polyol whose weight-average molecular weight (Mw) is 3,000 to 12,000 and whose number of functional groups (number of hydroxyl groups) is 3 to 4 is contained. As the polyether polyol, a polyether polyol obtained by ring-opening polymerization of an alkylene oxide is preferable since it has favorable reactivity. Examples of the alkylene oxide include propylene oxide (PO), and ethylene oxide (EO). One or more types of the alkylene oxide may be used as a material of the polyether polyol.

As the polyether polyol of the foaming stock solution, a polyether polyol obtained with combination of PO and EO is appropriate in consideration of raw material activity. A blending ratio (a molar ratio) of the PO and EO is not particularly limited. For example, as the EO/PO (the molar ratio), 8/92 to 25/75 is preferable, and 13/87 to 20/80 is more preferable. When the EO/PO (the molar ratio) is within this range, it is possible to easily generate a polyether polyol having favorable reactivity.

The number of hydroxyl groups (functional groups) included in one molecule of a polyether polyol of the foaming stock solution is preferably 3 to 4 and more preferably 3.5 to 4. Within such an appropriate range, a soft polyurethane foam having a moderate viscosity in the foaming stock solution and excellent physical properties is obtained. As an optional component, in addition to the polyether polyol of (A), a polyether polyol having two functional groups may be used in combination.

A weight-average molecular weight (Mw) of the polyether polyol of the foaming stock solution is preferably 3,000 to 12,000, more preferably 3,000 to 8,000, and most preferably 5,000 to 8,000. When the weight-average molecular weight of the polyether polyol is 12,000 or less, a viscosity of the foaming stock solution is not excessively high and stirring efficiency is improved. On the other hand, when the weight-average molecular weight of the polyether polyol is 3,000 or more, a soft polyurethane foam having a favorable rebound resilience is obtained. Here, the weight-average molecular weight (Mw) is a value that is calculated as a polystyrene conversion value by gel permeation chromatography (a GPC method).

A degree of unsaturation of the polyether polyol of the foaming stock solution is preferably 0.03 milliequivalents/g or less. When the degree of unsaturation is 0.03 milliequivalents/g or less, a soft polyurethane foam having favorable physical properties such as durability is obtained. Here, the "degree of unsaturation" refers to a total degree of unsaturation (milliequivalents/g) that is measured using a method of titrating acetate that is liberated when mercuric acetate acts on an unsaturated bond in a specimen with potassium hydroxide in compliance with JIS K 1557-1970.

One or more types of the polyether polyol may be contained in the foaming stock solution as the polyol component.

When one type of the polyether polyol is contained in the foaming stock solution as the polyol component, a polyether polyol whose weight-average molecular weight is 7,000 or more and whose number of functional groups is 4 is preferably contained. When the polyether polyol is contained, it is possible to significantly decrease the above-described feeling of shakiness when the soft polyurethane foam obtained by foam molding is used as a seat pad.

In order for desired physical properties to be easily provided to the soft polyurethane foam obtained by foam molding the foaming stock solution, as a total content of one or more types of the polyether polyol corresponding to the polyether polyol of (A) with respect to a total mass of the polyol component contained in the foaming stock solution, 60 mass% or more is preferable, 70 to 100 mass% is more preferable, 80 to 100 mass% is still more preferable, and 85 to 100 mass% is most preferable.

As the polyol component of the foaming stock solution, in addition to the polyether polyol, a polymer polyol may be used in combination. As the polymer polyol, a polymer polyol that is generally used for a polyurethane foam-molded article can be applied. For example, a polymer polyol that is obtained from a polyalkylene oxide and has a weight-average molecular weight (Mw) of 3,000 to 8,000 is preferable, and a polymer polyol obtained by graft copolymerization of a polymer component such as a polyacrylonitrile and an acrylonitrile-styrene copolymer with a polyether polyol having a weight-average molecular weight (Mw) of 4,000 to 7,000 is more preferable. As an alkylene oxide serving as a raw material of the polyalkylene oxide, an alkylene oxide containing propylene oxide (PO) as a functional group (a polymerizable group) is preferable. An alkylene oxide containing only propylene oxide or alkylene oxides containing both propylene oxide and ethylene oxide (EO) are more preferable. In addition, a content of the polymer component with respect to a total mass of the polymer polyol is preferably 25 to 50 mass%.

As a mixing ratio when a polyether polyol and a polymer polyol are mixed as the polyol component of the foaming stock solution, 70/30 to 99/1 is preferable, 80/20 to 99/1 is more preferable, and 85/15 to 99/1 is most preferable as a mass ratio of polyether polyol/polymer polyol. Within the above range, it is easy to obtain a soft polyurethane foam having desired physical properties.

### <Polyisocyanate component>

As a polyisocyanate component of the foaming stock solution, diphenylmethane diisocyanate is contained in an isocyanate equivalent of 70 or more.

The diphenylmethane diisocyanate (MDI) is a polyisocyanate component that is generally used in the field of polyurethane foams. Specific examples of MDI include 4,4-diphenylmethane diisocyanate (4,4-MDI), which is generally referred to as monomeric MDI, 2,4-diphenylmethane diisocyanate (2,4-MDI), 2,2-diphenylmethane diisocyanate (2,2-MDI), polymeric MDI, and crude MDI. One or more types of MDI may be contained in the foaming stock solution.

The term "isocyanate equivalent" indicating a total amount of polyisocyanate contained in the foaming stock solution refers to a molar ratio of an isocyanate group when an active hydrogen amount (a mole) in the foaming stock solution is set to 100.

The isocyanate equivalent derived from MDI contained in the foaming stock solution is at least 70 or more, preferably 70 to 120, and more preferably 80 to 100. When the isocyanate equivalent is 70 or more, it is possible to prevent stirring failure of the foaming stock solution. When the isocyanate equivalent is 120 or less, it is possible to prevent the occurrence of foam disintegration.

As the optional component, in addition to the MDI of (D), a known polyisocyanate component other than MDI may be added in a small amount. For example, tolylene diisocyanate (TDI), triphenyl diisocyanate, xylene diisocyanate, polymethylene polyphenylene polyisocyanate, hexamethylene diisocyanate, and isophorone diisocyanate are used.

In order for desired physical properties to be easily provided to the soft polyurethane foam obtained by foam molding the foaming stock solution, as a total content of one or more types of the diphenylmethane diisocyanate of (D) with respect to a total mass of the polyisocyanate component contained in the foaming stock solution, 70 mass% or more is preferable, 80 to 100 mass% is more preferable, 90 to 100 mass% is still more preferable, and 95 to 100 mass% is most preferable.

In addition, as a content of pure MDI as the diphenylmethane diisocyanate of (D) with respect to a total mass of the polyisocyanate component contained in the foaming stock solution, 40 mass% or more is preferable, 50 to 90 mass% is more preferable, 55 to 85 mass% is still more preferable, and 60 to 80 mass% is most preferable.

### <Cross-linking agent component>

In order for the soft polyurethane foam obtained by foam molding the foaming stock solution to have desired physical properties, as a cross-linking agent component of the foaming stock solution, a cross-linking agent having higher reactivity with respect to the polyisocyanate component than water is preferably contained as a main component. Generally, reactivity with respect to the polyisocyanate component decreases in an order of glycerin, a cross-linking agent (an EO-based cross-linking agent) including an ethylene oxide group, water, and a cross-linking agent (a PO-based cross-linking agent) including a propylene oxide group. Based on such a fact, as a molar ratio (the number of moles of EO groups/the number of moles of PO groups) between the EO groups and the PO groups contained in one or more types of all compounds that are contained as a cross-linking agent in the foaming stock solution, 100 or more is preferable, 105 or more is more preferable, and 110 or more is most preferable. The higher molar ratios are more preferable. That is, it is preferable that a cross-linking agent including a PO group not be substantially contained in the foaming stock solution.

Here, the ethylene oxide group (EO group) refers to a group having a monovalent bond since one hydrogen atom of ethylene oxide is removed. The propylene oxide group (PO group) refers to a group having a monovalent bond since one hydrogen atom of propylene oxide is removed.

As a specific cross-linking agent component, a known cross-linking agent used in the field of polyurethane foams can be applied. Generally, a molecular weight of the cross-linking agent is preferably 1,000 or less. In consideration of an increase of the molar ratio of EO groups/PO groups, a commercially available cross-linking agent represented by "EO (groups)/PO (groups)= 100/0" is preferable.

One or more types of the cross-linking agent may be contained in the foaming stock solution. When a cross-linking agent whose molar ratio of EO groups/PO groups is 100 or more and glycerin are used in combination, a mass ratio of the cross-linking agent/the glycerin is preferably 10:1 to 1:10, more preferably 5:1 to 1:5, and most preferably 2:1 to 1:2.

A total content of the cross-linking agent component contained in the foaming stock solution with respect to 100 parts by weight of the polyol component is preferably 0.5 to 10 parts by weight and more preferably 1 to 5 parts by weight. Within an upper limit or less of this range, it is possible to prevent independent pores from excessively increasing, molding problems, and foams from disintegrating. Within a lower limit or more of this range, an effect of the cross-linking agent is sufficiently obtained.

As the communicating agent, a cross-linking agent is used and a value of EO (groups)/PO (groups) of 2 or more is preferable.

### <Foaming agent component>

As a foaming agent component of the foaming stock solution, water is preferably used. Since water reacts with polyisocyanate and generates carbon dioxide gas, it serves as a foaming agent.

As a content of water in the foaming stock solution with respect to 100 parts by weight of the polyol component, 1 to 7 parts by weight is preferable, and 2 to 5 parts by weight is more preferable. Within this range, a soft polyurethane foam having desired physical properties is easily obtained. In addition, it is possible to prevent a thermal compression residual strain characteristic of the obtained soft polyurethane foam from deteriorating.

### <Catalyst component>

As a catalyst component of the foaming stock solution, a known catalyst used in the field of polyurethane foams is used. Examples of the known catalyst include an amine catalyst and a tin catalyst.

Generally, the known catalysts are broadly classified into a resin catalyst that promotes resinification of a polyurethane and a blowing catalyst that promotes foaming of a polyisocyanate component.

An appropriate resin catalyst is a tertiary amine catalyst that specifically promotes a reaction between a polyisocyanate and a polyol, and is not particularly limited. For example, triethylenediamine, 1,8-diazabicyclo[5.4.0]undecene-7, imidazoles such as 1-methylimidazole, 1,2-dimethylimidazole, and 1-isobutyl-2-methylimidazole, and 1,1'-(3-(dimethylamino)propyl)imino)bis(2-propanol) are used. In addition, an appropriate blowing catalyst is a tertiary amine catalyst that specifically promotes a reaction between isocyanate and water and effectively generates carbon dioxide gas, and is generally used to improve liquidity of a foam and dimensional stability. The blowing catalyst is not particularly limited, and bis(2-dimethylaminoethyl) ether, N,N,N',N",N"-pentamethyldiethylenetriamine, and N,N,N',N",N"', N"'-hexamethyltriethylenetetramine are exemplified.

In the foaming stock solution, at least a resin catalyst between the resin catalyst and the blowing catalyst is preferably contained as the catalyst component.

A mass ratio of the resin catalyst:the blowing catalyst contained in the foaming stock solution is preferably 100:0 to 100:100, more preferably 100:0 to 100:50 and most preferably 100:0 to 100:20.

A content of 1,1'-(3-(dimethylamino)propyl)imino)bis(2-propanol) serving as the resin catalyst with respect to 100 parts by weight of the polyol component is preferably 0.1 to 2.0 parts by weight, more preferably 0.2 to 1.5 parts by weight, still more preferably 0.3 to 1.2 parts by weight, and most preferably 0.4 to 0.9 parts by weight. Within this range, a soft polyurethane foam having desired physical properties is easily obtained.

When 1,1'-(3-(dimethylamino)propyl)imino)bis(2-propanol) serving as the resin catalyst and the blowing catalyst are used in combination, a total content of both catalysts with respect to 100 parts by weight of the polyol component is preferably 0.1 to 1.5 parts by weight, more preferably 0.4 to 1.2 parts by weight and most preferably 0.7 to 1.0 parts by weight. Within this range, a soft polyurethane foam having desired physical properties is easily obtained.

As the amine catalyst, in order to promote a resinification (gelation) reaction between polyols and polyisocyanates and promote urethane bond generation, a resin catalyst having a ratio of a blowing catalyst constant with respect to a gelling activity of 10×10⁻¹ or less is preferable.

Here, the gelling activity is a constant that determines a speed of a resinification reaction between polyols and polyisocyanates. As a value thereof increases, a crosslink density of a foam body increases, and mechanical physical properties of the foam body are improved. Specifically, a reaction constant of a gelation reaction between tolylene diisocyanate and diethylene glycol is used. On the other hand, the blowing catalyst constant is a constant that determines a speed of a blowing reaction between polyisocyanates and water. As a value thereof increases, communication of cells of the foam body increases. Specifically, a reaction constant of a blowing reaction between tolylene diisocyanate and water is used. A ratio between the two catalyst constants shows the balance between both the catalysts.

Examples of appropriate amine catalysts and specific examples of the resin catalyst are exemplified below.

Specific examples of the resin catalyst including the above-described catalyst include tertiary amines such as triethylenediamine (TEDA), a mixture of triethylenediamine and a polypropylene glycol, N,N,N',N'-tetramethylethylenediamine, N,N',N'-tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, and 135-tris(N, N-dimethylaminopropyl)hexahydro-S-triazine, imidazoles such as 1-methylimidazole, 1,2-dimethylimidazole, and 1-isobutyl-2-methylimidazole, and additionally N,N,N',N'-tetramethylhexamethylenediamine, N-methyl-N'-(2-dimethylaminoethyl)piperazine, N,N'-dimethylpiperazine, N-methylpiperazine, N-methylmorpholine, and N-ethylmorpholine.

A content of the amine catalyst in the foaming stock solution with respect to 100 parts by weight of the polyol component is preferably 0.1 to 0.4 parts by weight, more preferably 0.2 to 0.4 parts by weight, and most preferably 0.3 to 0.4 parts by weight. Within the lower limit of 0.1 parts by weight of this range or more, it is possible to prevent foams from disintegrating. Within the upper limit of 0.4 parts by weight of the range or less, it is possible to prevent the occurrence of shrinkage due to independent pores.

Specific examples of the tin catalyst include known organic tin catalysts such as stannous octoate, stannous laurate, dibutyltin dilaurate, dibutyltin maleate, dibutyltin diacetate, dioctyltin diacetate, and tin octylate.

A content of the tin catalyst in the foaming stock solution with respect to 100 parts by weight of the polyol component is preferably 0.01 to 0.5 parts by weight, more preferably 0.01 to 0.4 parts by weight, and most preferably 0.01 to 0.2 parts by weight.

### <Foam stabilizer component>

A foam stabilizer may be contained in the foaming stock solution. As the foam stabilizer, a known foam stabilizer used in the field of polyurethane foams can be applied. For example, a silicone-based foam stabilizer, an anionic foam stabilizer, and a cationic foam stabilizer are used. A foam stabilizer having a hydroxyl group at a molecular chain terminal is included in such foam stabilizers.

A content of the foam stabilizer in the foaming stock solution with respect to 100 parts by weight of the polyol component is preferably 0.1 to 5 parts by weight, more preferably 0.2 to 3 parts by weight, and most preferably 0.3 to 0.8 parts by weight. Generally, at a content ratio of 5 parts by weight or less, an effect as the foam stabilizer is sufficiently obtained. In addition, at a content ratio of 0.1 parts by weight or more, a stirring ability of a polyol component and a polyisocyanate component increases, and a soft polyurethane foam having desired physical properties is easily obtained.

### <Other optional components>

Various additives can be blended into the foaming stock solution as necessary. For example, a coloring agent such as a pigment, a chain extender, a filling material such as calcium carbonate, a flame retardant, an antioxidant, an ultraviolet-absorbing agent, a light stabilizer, a conductive substance such as carbon black, and an antibacterial agent can be blended in. A blending amount of various additives is appropriately regulated according to applications and purposes.

### <Method of preparing foaming stock solution>

A method of preparing a foaming stock solution is not particularly limited. For example, a method of preparing a foaming stock solution is provided in which a mixture of the remaining components other than a polyisocyanate component (hereinafter abbreviated as a "polyol mixture") is prepared and then mixed with the polyisocyanate component.

When the polyol mixture is prepared, in order to reduce contact of water serving as a foaming agent with a catalyst component, preferably, the catalyst component is first mixed with the polyol component, and a foam stabilizer component, a cross-linking agent component, and an optional component are then mixed in as necessary, and water serving as a foaming agent is finally mixed in.

Then, in a process in which foam molding of a soft polyurethane foam is performed, it is preferable to prepare a foaming stock solution by mixing the polyol mixture with the polyisocyanate component.

A viscosity at a liquid temperature of 25°C of the prepared polyol mixture is preferably 2,400 mPa·s or less, and more preferably 1,800 mPa·s or less. Within such an appropriate viscosity range, stirring efficiency of the foaming stock solution is favorable, a sufficient amount of foam is uniformly obtained in all the foaming stock solution and a soft polyurethane foam having desired physical properties (a foam-molded article) is easily obtained.

A method of foam molding the soft polyurethane foam by using the foaming stock solution is not particularly limited. For example, a known method of foam molding in which a foaming stock solution is injected into a cavity that is formed in a mold can be applied.

In the above known method, in order to prevent components of the foaming stock solution from being separated, the above-described components are preferably mixed to prepare the foaming stock solution immediately before the foaming stock solution is injected into the cavity. A liquid temperature of the foaming stock solution to be injected is preferably 10 to 50°C, more preferably 20 to 40°C and most preferably 25 to 35°C. A temperature of the mold is preferably 40 to 80°C, more preferably 50 to 70°C, and most preferably 60 to 65°C. When the liquid temperature of the foaming stock solution and the temperature of the mold are within the above appropriate ranges, appropriate foaming is obtained. Subsequently to the foaming, after curing is performed in the mold, a target soft polyurethane foam is obtained by demolding. A known film removal treatment may be further performed on the soft polyurethane foam obtained here.

### <Stiffness distribution in thickness direction of soft polyurethane foam>

Without using the method of foam molding, the soft polyurethane foam according to the present invention has stiffness (hardness) that tends to gradually increase in a thickness direction (that is, in an upward direction along a vertical line) from a lower layer to an upper layer during foam molding. That is, a stiffness distribution in the thickness direction of the soft polyurethane foam according to the present invention shows a continuously increasing trend or decreasing trend. Here, when viewed in a direction from a lower layer to an upper layer during foam molding of the soft polyurethane foam, the stiffness distribution shows an increasing trend. However, when viewed in a direction from an upper layer to a lower layer during foam molding of the same soft polyurethane foam, the stiffness distribution shows a decreasing trend.

While a mechanism by which the soft polyurethane foam according to the present invention exhibits the above stiffness distribution is not known in detail, combinations of components of the foaming stock solution are considered to be factors. In particular, a main polymerizable group (a reactive group) of the cross-linking agent component being an EO group, lack of PO groups to an extent at which a cross-linking effect is substantially exhibited in the cross-linking agent component, inclusion of MDI as a large part of the polyisocyanate component, and inclusion of a small amount or none of TDI are considered to be major factors. In addition, inclusion of glycerin in the cross-linking agent component and inclusion of the resin catalyst in the catalyst component are also considered to greatly contribute to the stiffness distribution being exhibited.

In addition, when the soft polyurethane foam that exhibits the above stiffness distribution is cut in the thickness direction, it is observed that a degree of flatness of a foaming cell shape in the cross section tends to gradually increase from an upper layer to a lower layer during foam molding. That is, in the soft polyurethane foam obtained by foam molding, a foaming cell that is positioned in a lower layer during foam molding shows a horizontally long flat shape (an elliptical shape) that collapses in the gravity direction, a degree of flatness in a foaming cell that is positioned in a middle layer is comparatively reduced and the shape approaches a circle, and a degree of flatness in a foaming cell that is positioned in an upper layer is further reduced, and the shape tends to be closer to a circle. In this manner, a change in the shape of the foaming cells occurring in the cross section of the soft polyurethane foam in the thickness direction is considered to have a correlation with a trend of the stiffness distribution.

The "softness" of the soft polyurethane foam according to the present invention refers to a hardness (stiffness) of an extent at which the soft polyurethane foam is deformed and recessed when the soft polyurethane foam is pressed by hand or a user sits thereon.

### [Examples]

Next, the present invention will be described in further detail with reference to examples although the present invention is not limited to the following examples.

### [Examples 1 to 30 and Comparative Examples 1 to 6]

According to formulations shown in Table 1 to Table 5, a mixed solution containing components other than polyisocyanate was mixed with polyisocyanate to prepare a foaming stock solution. The foaming stock solution was injected into a mold for foam molding, and a seat pad having a thickness of 70 mm was produced. A hardness of the obtained seat pad was measured by the following measurement methods and the following evaluations were performed.

**[Table 1]**

| | | | Example 1 | Example 2 | Example 3 | Example 4 | Example 5 | Example 6 | Example 7 | Example 8 |
|---|---|---|---|---|---|---|---|---|---|---|
| Polyether polyol | Polyether polyol A | Polyol (A1-1) | 100.00 | 100.00 | | | | | | |
| | Polyether polyol B | Polyol (A1-2 | | | 100.00 | | | | | |
| | Polyether polyol C | Polyol (A1-3 | | | | 100.00 | | | | |
| | Polyether polyol D | Polyol (A1-4) | | | | | 100.00 | 100.00 | 90.00 | 85.00 |
| Polymer polyol | KC855 | Polymer polyol (A2-1) | | | | | | | 10.00 | 15.00 |
| Cross-linking agent | SC490 | Cross-linking agent (C-1) | | | | | | | | |
| | Polyether polyol E | Cross-linking agent (C-2) | 1.00 | 1.00 | 1.00 | 1.00 | 1.00 | 1.00 | 1.00 | 1.00 |
| | Glycerin | Cross-linking agent (C-3) | 1.00 | 1.00 | 1.00 | 1.00 | 1.00 | 1.00 | 1.00 | 1.00 |
| Communicating agent | FA103 | Communicating agent (D-1) | | | | | | | | |
| | M9185 | Communicating agent (D-2) | | | | | | | | |
| | FA153 | Communicating agent (D-3) | | | | | | | | |
| Catalyst | MP602 | Catalyst (E-1) | | | | | | | | |
| | DPA | Catalyst (E-2) | 0.90 | 1.20 | 0.90 | 0.90 | 0.90 | 0.90 | 0.90 | 0.90 |
| | NE300 | Catalyst (E-3) | | | | | | | | |
| | DM1098 | Catalyst (E-4) | | | | | | | | |
| | Diethanolamine | Catalyst (E-5) | | | | | | | | |
| | ET33B | Catalyst (E-6) | | | | | | | | |
| | 33LV | Catalyst (E-7) | | | | | | | | |
| Foam stabilizer | B8746 | Foam stabilizer (F-1) | | | | | | | | |
| | B8734 | Foam stabilizer (F-2) | 0.80 | 0.80 | 0.80 | 0.80 | 0.80 | 0.40 | 0.40 | 0.40 |
| | B8742 | Foam stabilizer (F-3) | | | | | | | | |
| Foaming agent | Water | Foaming agent (G-1) | 3.30 | 3.30 | 3.30 | 3.30 | 3.30 | 3.30 | 3.30 | 3.30 |
| Subtotal (Parts by weight) | | | 107.00 | 107.30 | 107.00 | 107.00 | 107.00 | 106.60 | 106.60 | 106.60 |
| Isocyanate | | Isocyanate (B-1) | 82 | 82 | 87 | 83 | 84 | 84 | 78 | 75 |
| | | Isocyanate (B-2) | | | | | | | | |
| | | Isocyanate (B-3) | | | | | | | | |
| | | Isocyanate (B-4) | | | | | | | | |
| | | Isocyanate (B-5) | | | | | | | | |
| | | Isocyanate (B-6) | | | | | | | | |
| | | Depth from surface | Example 1 | Example 2 | Example 3 | Example 4 | Example 5 | Example 6 | Example 7 | Example 8 |
| | | 10.5% | 0.489 | 0.487 | 0.488 | 0.484 | 0.474 | 0.433 | 0.334 | 0.320 |
| | | 31.6% | 0.579 | 0.572 | 0.566 | 0.571 | 0.612 | 0.539 | 0.371 | 0.393 |
| | | 52.6% | 0.646 | 0.629 | 0.643 | 0.629 | 0.712 | 0.671 | 0.565 | 0.562 |
| | | 73.7% | 0.779 | 0.808 | 0.882 | 0.813 | 0.846 | 0.814 | 0.722 | 0.737 |
| | | Total | 2.492 | 2.496 | 2.579 | 2.496 | 2.644 | 2.457 | 1.992 | 2.012 |
| | | 25% Hardness | 22.4 | 22.1 | 23.1 | 23.0 | 24.9 | 22.6 | 20.9 | 20.3 |

**[Table 2]**

| | | | Example 9 | Example 10 | Example 11 | Example 12 | Example 13 | Example 14 | Example 15 | Example 16 |
|---|---|---|---|---|---|---|---|---|---|---|
| Polyether polyol | Polyether polyol A | Polyol (A1-1) | | 80.00 | 80.00 | 80.00 | 80.00 | 80.00 | | |
| | Polyether polyol B | Polyol (A1-2 | | | | | | | | |
| | Polyether polyol C | Polyol (A1-3 | | | | | | | | |
| | Polyether polyol D | Polyol (A1-4) | 90.00 | | | | | | 88.00 | 88.00 |
| Polymer polyol | KC855 | Polymer polyol (A2-1) | 10.00 | 20.00 | 20.00 | 20.00 | 20.00 | 20.00 | 10.00 | 10.00 |
| Cross-linking agent | SC490 | Cross-linking agent (C-1) | | | | | | | | |
| | Polyether polyol E | Cross-linking agent (C-2) | 1.00 | 1.00 | 1.00 | 1.00 | 1.00 | 1.00 | 1.00 | 1.00 |
| | Glycerin | Cross-linking agent (C-3) | | | | | | | 1.00 | 1.00 |
| Communicating agent | FA103 | Communicating agent (D-1) | | | | | | | 2.00 | |
| | M9185 | Communicating agent (D-2) | | | | | | | | 2.00 |
| | FA153 | Communicating agent (D-3) | | | | | | | | |
| Catalyst | MP602 | Catalyst (E-1) | | | | | | | | |
| | DPA | Catalyst (E-2) | 0.45 | 0.15 | 0.15 | 0.15 | 0.15 | 0.15 | 0.90 | 0.90 |
| | NE300 | Catalyst (E-3) | | | | | | | | |
| | DM1098 | Catalyst (E-4) | 0.40 | 0.75 | 0.75 | 0.75 | 0.75 | 0.75 | | |
| | Diethanolamine | Catalyst (E-5) | | | | | | | | |
| | ET33B | Catalyst (E-6) | | | | | | | | |
| | 33LV | Catalyst (E-7) | | | | | | | | |
| Foam stabilizer | B8746 | Foam stabilizer (F-1) | | | | | | | | |
| | B8734 | Foam stabilizer (F-2) | 0.80 | | | | | | 0.40 | 0.40 |
| | B8742 | Foam stabilizer (F-3) | | 0.40 | 0.40 | 0.40 | 0.40 | 0.40 | | |
| Foaming agent | Water | Foaming agent (G-1) | 3.00 | 2.80 | 3.00 | 3.00 | 3.00 | 3.00 | 3.30 | 3.30 |
| Subtotal (Parts by weight) | | | 105.65 | 105.10 | 105.30 | 105.30 | 105.30 | 105.30 | 106.60 | 106.60 |
| Isocyanate | | Isocyanate (B-1) | 79 | 80 | 75 | 90 | | | 78 | 78 |
| | | Isocyanate (B-2) | | | | | 90 | | | |
| | | Isocyanate (B-3) | | | | | | 85 | | |
| | | Isocyanate (B-4) | | | | | | | | |
| | | Isocyanate (B-5) | | | | | | | | |
| | | Isocyanate (B-6) | | | | | | | | |

| | | Depth from surface | Example 9 | Example 10 | Example 11 | Example 12 | Example 13 | Example 14 | Example 15 | Example 16 |
|---|---|---|---|---|---|---|---|---|---|---|
| | | 10.5% | 0.429 | 0.385 | 0.379 | 0.577 | 0.439 | 0.560 | 0.313 | 0.320 |
| | | 31.6% | 0.508 | 0.453 | 0.429 | 0.681 | 0.520 | 0.623 | 0.382 | 0.418 |
| | | 52.6% | 0.612 | 0.529 | 0.534 | 0.829 | 0.631 | 0.723 | 0.538 | 0.594 |
| | | 73.7% | 0.767 | 0.613 | 0.653 | 0.899 | 0.765 | 0.901 | 0.697 | 0.762 |
| | | Total | 2.316 | 1.980 | 1.995 | 2.985 | 2.355 | 2.808 | 1.931 | 2.093 |
| | | 25% Hardness | 23.1 | 19.1 | 19.0 | 29.5 | 23.4 | 29.8 | 20.1 | 20.3 |

**[Table 3]**

| | | | Example 17 | Example 18 | Example 19 | Example 20 | Example 21 | Example 22 | Example 23 | Example 24 |
|---|---|---|---|---|---|---|---|---|---|---|
| Polyether polyol | Polyether polyol A | Polyol (A1-1) | | | | | 45.00 | 80.00 | 80.00 | 80.00 |
| | Polyether polyol B | Polyol (A1-2 | | 90.00 | 90.00 | 90.00 | | | | |
| | Polyether polyol C | Polyol (A1-3 | | | | | | | | |
| | Polyether polyol D | Polyol (A1-4) | 88.00 | | | | 45.00 | | | |
| Polymer polyol | KC855 | Polymer polyol (A2-1) | 10.00 | 10.00 | 10.00 | 10.00 | 10.00 | 20.00 | 20.00 | 20.00 |
| Cross-linking agent | SC490 | Cross-linking agent (C-1) | | | | | | | | |
| | Polyether polyol E | Cross-linking agent (C-2) | 1.00 | 1.00 | 1.00 | 1.00 | 1.00 | 1.00 | 1.00 | 1.00 |
| | Glycerin | Cross-linking agent (C-3) | 1.00 | | | | 1.00 | | | |
| Communicating agent | FA103 | Communicating agent (D-1) | | | | | | | | |
| | M9185 | Communicating agent (D-2) | | | | | | | | |
| | FA153 | Communicating agent (D-3) | 2.00 | | | | | | | |
| Catalyst | MP602 | Catalyst (E-1) | | | | | | | | |
| | DPA | Catalyst (E-2) | 0.90 | 0.45 | 0.45 | 0.45 | 0.90 | 0.30 | 0.30 | 0.30 |
| | NE300 | Catalyst (E-3) | | | | | | | | |
| | DM1098 | Catalyst (E-4) | | 0.40 | 0.40 | 0.40 | | 0.75 | 0.40 | |
| | Diethanolamine | Catalyst (E-5) | | | | | | | | |
| | ET33B | Catalyst (E-6) | | | | | | | | |
| | 33LV | Catalyst (E-7) | | | | | | | 0.10 | 0.30 |
| Foam stabilizer | B8746 | Foam stabilizer (F-1) | | | | | | | | |
| | B8734 | Foam stabilizer (F-2) | 0.40 | 0.80 | 0.80 | 0.80 | 0.40 | 0.40 | 0.40 | 0.40 |
| | B8742 | Foam stabilizer (F-3) | | | | | | | | |
| Foaming agent | Water | Foaming agent (G-1) | 3.30 | 3.00 | 3.00 | 3.00 | 3.30 | 3.00 | 3.00 | 3.00 |
| Subtotal (parts by weight) | | | 106.60 | 105.65 | 105.65 | 105.65 | 106.60 | 105.45 | 105.20 | 105.00 |
| Isocyanate | | Isocyanate (B-1) | 78 | 90 | | | 78 | 80 | 80 | 80 |
| | | Isocyanate (B-2) | | | | | | | | |
| | | Isocyanate (B-3) | | | | | | | | |
| | | Isocyanate (B-4) | | | 90 | | | | | |
| | | Isocyanate (B-5) | | | | 90 | | | | |
| | | Isocyanate (B-6) | | | | | | | | |

| | | Depth from surface | Example 17 | Example 18 | Example 19 | Example 20 | Example 21 | Example 22 | Example 23 | Example 24 |
|---|---|---|---|---|---|---|---|---|---|---|
| | | 10.5% | 0.332 | 0.493 | 0.480 | 0.416 | 0.356 | 0.434 | 0.405 | 0.391 |
| | | 31.6% | 0.434 | 0.549 | 0.507 | 0.465 | 0.433 | 0.556 | 0.428 | 0.430 |
| | | 52.6% | 0.574 | 0.621 | 0.613 | 0.532 | 0.563 | 0.594 | 0.527 | 0.545 |
| | | 73.7% | 0.762 | 0.769 | 0.791 | 0.641 | 0.730 | 0.689 | 0.626 | 0.613 |
| | | Total | 2.102 | 2.432 | 2.391 | 2.053 | 2.082 | 2.272 | 1.985 | 1.980 |
| | | 25% Hardness | 19.1 | 23.4 | 22.1 | 22.9 | 21.4 | 21.2 | 20.1 | 20.3 |

**[Table 4]**

| | | | Example 25 | Example 26 | Example 27 | Example 28 | Example 29 | Example 30 |
|---|---|---|---|---|---|---|---|---|
| Polyether polyol | Polyether polyol A | Polyol (A1-1) | | | 80.00 | 80.00 | | |
| | Polyether polyol B | Polyol (A1-2 | 80.00 | 80.00 | | | 80.00 | 80.00 |
| | Polyether polyol C | Polyol (A1-3 | | | | | | |
| | Polyether polyol D | Polyol (A1-4) | | | | | | |
| Polymer polyol | KC855 | Polymer polyol (A2-1) | 20.00 | 20.00 | 20.00 | 20.00 | 20.00 | 20.00 |
| Cross-linking agent | SC490 | Cross-linking agent (C-1) | | | | | | |
| | Polyether polyol E | Cross-linking agent (C-2) | 1.00 | 1.00 | 1.00 | 1.00 | 1.00 | 1.00 |
| | Glycerin | Cross-linking agent (C-3) | | | | | | |
| Communicating agent | FA103 | Communicating agent (D-1) | | | | | | |
| | M9185 | Communicating agent (D-2) | | | | | | |
| | FA153 | Communicating agent (D-3) | | | | | | |
| Catalyst | MP602 | Catalyst (E-1) | | | | | | |
| | DPA | Catalyst (E-2) | 0.25 | | | 0.25 | 0.15 | 0.15 |
| | NE300 | Catalyst (E-3) | | | | | | |
| | DM1098 | Catalyst (E-4) | 0.45 | | 0.75 | 0.75 | 0.75 | 0.75 |
| | Diethanolamine | Catalyst (E-5) | | | 0.50 | 0.50 | | |
| | ET33B | Catalyst (E-6) | 0.40 | 0.40 | | | | |
| | 33LV | Catalyst (E-7) | | 0.40 | 0.10 | | | |
| Foam stabilizer | B8746 | Foam stabilizer (F-1) | | | | | | |
| | B8734 | Foam stabilizer (F-2) | 0.80 | 0.80 | | | | |
| | B8742 | Foam stabilizer (F-3) | | | 0.40 | 0.40 | 0.40 | 0.40 |
| Foaming agent | Water | Foaming agent (G-1) | 3.00 | 3.00 | 3.00 | 3.00 | 3.00 | 3.00 |
| Subtotal (Parts by weight) | | | 105.90 | 105.60 | 105.75 | 105.90 | 105.30 | 105.30 |
| Isocyanate | | Isocyanate (B-1) | 84 | 84 | 83 | 83 | | |
| | | Isocyanate (B-2) | | | | | | |
| | | Isocyanate (B-3) | | | | | | |
| | | Isocyanate (B-4) | | | | | | |
| | | Isocyanate (B-5) | | | | | | |
| | | Isocyanate (B-6) | | | | | 83 | 89 |

| | | Depth from surface | Example 25 | Example 26 | Example 27 | Example 28 | Example 29 | Example 30 |
|---|---|---|---|---|---|---|---|---|
| | | 10.5% | 0.489 | 0.430 | 0.464 | 0.425 | 0.397 | 0.446 |
| | | 31.6% | 0.579 | 0.507 | 0.523 | 0.504 | 0.464 | 0.517 |
| | | 52.6% | 0.634 | 0.587 | 0.603 | 0.607 | 0.489 | 0.550 |
| | | 73.7% | 0.682 | 0.600 | 0.677 | 0.679 | 0.541 | 0.609 |
| | | Total | 2.385 | 2.125 | 2.267 | 2.215 | 1.891 | 2.122 |
| | | 25% Hardness | 24.1 | 22.5 | 23.2 | 23.5 | 19.9 | 22.2 |

**[Table 5]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Polyether polyol | Polyether polyol A | Polyol (A1-1) | 100.00 | 100.00 | 100.00 | 100.00 | 100.00 | 100.00 | | | 80.00 |
| | Polyether polyol B | Polyol (A1-2) | | | | | | | 80.00 | 80.00 | |
| | Polyether polyol C | Polyol (A1-3) | | | | | | | | | |
| | Polyether polyol D | Polyol (A1-4) | | | | | | | | | |
| Polymer polyol | KC855 | Polymer polyol (A2-1) | | | | | | | 20.00 | 20.00 | 20.00 |
| Cross-linking agent | SC490 | Cross-linking agent (C-1) | 1.00 | 1.00 | | 1.00 | 1.00 | 1.00 | | | |
| | Polyether polyol E | Cross-linking agent (C-2) | | | | 1.00 | | | 1.00 | 1.00 | |
| | Glycerin | Cross-linking agent (C-3) | | | | | 1.00 | | | | |
| Communicating agent | FA103 | Communicating agent (D-1) | | | | | | | | | |
| | M9185 | Communicating agent (D-2) | | | | | | | | | |
| | FA153 | Communicating agent (D-3) | | | | | | | | | |
| Catalyst | MP602 | Catalyst (E-1) | 0.20 | 0.20 | 0.20 | 0.20 | 0.20 | 0.20 | | | |
| | DPA | Catalyst (E-2) | 0.90 | 0.90 | 0.90 | 0.90 | 0.90 | 0.90 | 0.25 | | 0.15 |
| | NE300 | Catalyst (E-3) | 0.05 | 0.05 | 0.05 | 0.05 | 0.05 | 0.05 | | | |
| | DM1098 | Catalyst (E-4) | | | | | | | 0.45 | | 0.75 |
| | Diethanolamine | Catalyst (E-5) | 0.40 | 0.40 | 0.40 | 0.40 | 0.40 | 0.40 | | | |
| | ET33B | Catalyst (E-6) | | | | | | | 0.80 | 0.60 | |
| | 33LV | Catalyst (E-7) | | | | | | | | 0.40 | |
| Foam stabilizer | B8746 | Foam stabilizer (F-1) | 0.40 | 0.40 | 0.40 | 0.40 | 0.40 | 0.40 | | | |
| | B8734 | Foam stabilizer (F-2) | 0.80 | 0.80 | 0.80 | 0.80 | 0.80 | 0.80 | 0.80 | 0.80 | |
| | B8742 | Foam stabilizer (F-3) | | | | | | | | | 0.40 |
| Foaming agent | Water | Foaming agent (G-1) | 3.30 | 3.30 | 3.30 | 3.30 | 3.30 | 3.00 | 3.00 | 3.00 | 3.00 |
| Subtotal (Parts by weight) | | | 107.05 | 107.05 | 106.05 | 108.05 | 108.05 | 106.75 | 106.30 | 105.80 | 104.30 |
| Isocyanate | | Isocyanate | 90 | 95 | 90 | 88 | 86 | 92 | 84 | 84 | 78 |
| | | (B-1) | | | | | | | | | |
| | | Isocyanate (B-2) | | | | | | | | | |
| | | Isocyanate (B-3) | | | | | | | | | |
| | | Isocyanate (B-4) | | | | | | | | | |
| | | Isocyanate (B-5) | | | | | | | | | |
| | | Isocyanate (B-6) | | | | | | | | | |

| | | Depth from surface | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| | | 10.5% | 0.583 | 0.707 | 0.487 | 0.485 | 0.480 | 0.475 | 0.488 | 0.477 | 0.452 |
| | | 31.6% | 0.549 | 0.636 | 0.525 | 0.521 | 0.520 | 0.495 | 0.549 | 0.544 | 0.483 |
| | | 52.6% | 0.589 | 0.634 | 0.566 | 0.584 | 0.569 | 0.573 | 0.566 | 0.581 | 0.527 |
| | | 73.7% | 0.652 | 0.722 | 0.658 | 0.644 | 0.675 | 0.639 | 0.593 | 0.590 | 0.551 |
| | | Total | 2.373 | 2.699 | 2.236 | 2.234 | 2.244 | 2.181 | 2.197 | 2.191 | 2.013 |
| | | 25% Hardness | 20.5 | 24.3 | 21.5 | 21.3 | 22.1 | 20.7 | 22.6 | 23.7 | 22.0 |

**[Table 6]**

| | Example 1 | Example 2 | Example 3 | Example 4 | Example 5 |
|---|---|---|---|---|---|
| Feeling of shakiness | C | C | C | C | B |

| | Example 6 | Example 7 | Example 8 | Example 9 | Example 10 |
|---|---|---|---|---|---|
| Feeling of shakiness | B | A | A | B | C |

| | Example 11 | Example 12 | Example 13 | Example 14 | Example 15 |
|---|---|---|---|---|---|
| Feeling of shakiness | C | C | B | C | A |

| | Example 16 | Example 17 | Example 18 | Example 19 | Example 20 |
|---|---|---|---|---|---|
| Feeling of shakiness | A | A | C | C | C |

| | Example 21 | Example 22 | Example 23 | Example 24 | Example 25 |
|---|---|---|---|---|---|
| Feeling of shakiness | A | C | C | C | C |

| | Example 26 | Example 27 | Example 28 | Example 29 | Example 30 |
|---|---|---|---|---|---|
| Feeling of shakiness | C | C | C | C | C |

**[Table 7]**

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Feeling of shakiness | E | E | D | D | D | D | D | D | D |

### <Measurement of hardness at depth positions>

Hereinafter, by reversing an up-and-down orientation during foam molding, a lower surface during foam molding was set as a surface and a top surface during foam molding was set as a rear surface. This is because, when the soft polyurethane foam was used as a seat pad, if a configuration in which the surface side corresponding to a bearing surface of the seat pad was soft and the rear surface side of a side opposite to the bearing surface was hard was used, it was easy to obtain stable seating comfort.

Four evaluation samples as vertical 20 mm×horizontal 20 mm×thickness 15 mm samples were cut from a surface of a seat pad having a thickness of 70 mm, and a hardness was measured.

The measurement results are shown in Tables 1 to 5. In the tables, a unit of a measurement value is (unit: N/mm²). In addition, in the tables, a column of "depth from surface of 10.5%" corresponds to a first evaluation sample, a column of "depth from surface of 31.6%" corresponds to a second evaluation sample, a column of "depth from surface of 52.6%" corresponds to a third evaluation sample, and a column of "depth from surface of 73.7%" corresponds to a fourth evaluation sample.

### <25% Hardness>

Separately from the above measured hardness, a 25% hardness of molded articles was measured in compliance with JIS K 6400-2. The measurement values (unit: N/mm²) are shown in Tables 1 to 5.

### <Hardness ratio>

An average of the measurement values of hardnesses of four parts whose depth positions from a surface were different that were measured above was calculated and a hardness ratio of each of the parts with respect to the average value was calculated. The hardness ratio refers to a ratio of a hardness of each part (each depth position) with respect to an average hardness in the thickness direction of the foam-molded article. Such results are shown in Tables 1 to 5. In addition, Fig. 1 shows graphs of Example 1 to 9 and Comparative Examples 1 to 6 in which a horizontal axis represents depth positions and a vertical axis represents a hardness ratio.

### <Evaluation criteria related to decrease of feeling of shakiness>

When a hardness ratio of depth 10.5% (the first evaluation sample) is greater than a hardness ratio of depth 31.6% (the second evaluation sample), a feeling of stability required for a seat pad is insufficient and a feeling of shakiness when G is applied in a lateral direction is strong, which is determined as "E."

When a hardness ratio of depth 10.5% is smaller than a hardness ratio of depth 31.6% and a hardness ratio of depth 10.5% is 0.85 or more and less than 1, a feeling of stability required for a seat pad is felt slightly, and a feeling of shakiness when G is applied in the lateral direction is slightly decreased, which is determined as "D."

When a hardness ratio of depth 10.5% is smaller than a hardness ratio of depth 31.6% and a hardness ratio of depth 10.5% is 0.75 or more and less than 0.85, a feeling of stability required for a seat pad is provided and a feeling of shakiness when G is applied in the lateral direction is decreased, which is determined as "C."

When a hardness ratio of depth 10.5% is smaller than a hardness ratio of depth 31.6% and a hardness ratio of depth 10.5% is 0.70 or more and less than 0.75, a feeling of stability required for a seat pad is favorable and a decrease of a feeling of shakiness when G is applied in the lateral direction is favorable, which is determined as "B."

When a hardness ratio of depth 10.5% is smaller than a hardness ratio of depth 31.6% and a hardness ratio of depth 10.5% is less than 0.70, a feeling of stability required for a seat pad is excellent and a decrease of a feeling of shakiness when G is applied in the lateral direction is excellent, which is determined as "A." Such evaluation results are shown in Table 6 and Table 7.

As shown in the graphs of Fig. 1, in the soft polyurethane foams of Examples 1 to 9, a hardness in the thickness direction from the surface to the rear surface continuously increases. That is, a stiffness distribution in the thickness direction shows a continuously increasing trend. As a result, a feeling of shakiness required for seat pad applications is sufficiently decreased. In addition, since a hardness ratio in the vicinity of the surface is comparatively small, a repulsive force in seating is moderate and a feeling of pressure from the bearing surface is slight, seating comfort that is different from that in the related art is obtained.

Similarly to the soft polyurethane foams of Examples 10 to 30 (not shown), a hardness in the thickness direction from the surface to the rear surface continuously increases. As a result, a feeling of shakiness required for seat pad applications is sufficiently decreased. In addition, since a hardness ratio in the vicinity of the surface is comparatively small, a repulsive force in seating is moderate and a feeling of pressure from the bearing surface is slight, seating comfort that is different from that in the related art is obtained.

At least one factor among inclusion of MDI in a foaming stock solution of the soft polyurethane foam as a main polyisocyanate component, inclusion of a great amount of glycerin as a cross-linking agent, inclusion of an EO-based cross-linking agent as a main cross-linking agent component without substantially a PO-based cross-linking agent being contained, and inclusion of a resin catalyst as a main catalyst component is thought to cause the stiffness distribution of the soft polyurethane foams of Examples 1 to 30 to be exhibited.

On the other hand, as can be seen from the graphs of Fig. 1, in the soft polyurethane foams of Comparative Examples 1 and 2, a hardness ratio of depth 31.6% is smaller than a hardness ratio of depth 10.5%. In such stiffness distribution, when G is applied in the lateral direction, a sensation of horizontal deviation of the soft polyurethane foam occurs in a middle layer deeper than the surface close to a seating surface and a feeling of shakiness is likely to be felt.

At least one factor among lack of glycerin as a cross-linking agent in a foaming stock solution of the soft polyurethane foam, inclusion of a large amount of a PO-based cross-linking agent as a cross-linking agent, inclusion of a large amount of a blowing catalyst as a catalyst and inclusion of a large amount of a foam stabilizer is thought to cause the stiffness distribution of the soft polyurethane foams of Comparative Examples 1 and 2 to be exhibited.

The soft polyurethane foams of Comparative Examples 3 to 6 and Comparative Examples 7 to 9 (not shown) show a further improved feeling of shakiness than Comparative Examples 1 and 2. While the stiffness distribution in the thickness direction shown in Fig. 1 shows a continuously increasing trend, since a hardness ratio of depth 10.5% is greater than those of the examples, a feeling of stability (a feeling of hold) in seating and a feeling of stability when G is applied in the lateral direction are relatively small and a decrease of a feeling of shakiness is relatively small.

At least one factor among lack of a cross-linking agent in a foaming stock solution of the soft polyurethane foam, inclusion of a large amount of a blowing catalyst as a catalyst, and inclusion of a large amount of a foam stabilizer is thought to cause the stiffness distribution of the soft polyurethane foam of Comparative Example 3 to be exhibited.

At least one factor among inclusion of a large amount of a PO-based cross-linking agent as a cross-linking agent in a foaming stock solution of the soft polyurethane foam, inclusion of a large amount of a blowing catalyst as a catalyst, and inclusion of a large amount of a foam stabilizer is thought to cause the stiffness distribution of the soft polyurethane foams of Comparative Examples 4 to 6 to be exhibited.

At least one factor among inclusion of a polymer polyol in a foaming stock solution of the soft polyurethane foam, lack of glycerin as a cross-linking agent, and inclusion of a large amount of a blowing catalyst as a catalyst is thought to cause the stiffness distribution of the soft polyurethane foam of Comparative Example 7 (not shown) to be exhibited.

At least one factor among inclusion of a polymer polyol in a foaming stock solution of the soft polyurethane foam, lack of glycerin as a cross-linking agent, and inclusion of triethylenediamine as a catalyst is thought to cause the stiffness distribution of the soft polyurethane foam of Comparative Example 8 (not shown) to be exhibited.

At least one factor among inclusion of a polymer polyol in a foaming stock solution of the soft polyurethane foam, lack of a cross-linking agent, lack of a foam stabilizer and inclusion of a large amount of N,N-dimethyldodecylamine as a catalyst is thought to cause the stiffness distribution of the soft polyurethane foam of Comparative Example 9 (not shown) to be exhibited.

Details of the materials shown in Tables 1 to 5 are as follows.

The "polyether polyol A1-1" was a three-functional polyether polyol having an EO/PO molar ratio of 13/87 and a weight-average molecular weight of 7,000.

The "polyether polyol A1-2" was a three-functional polyether polyol having an EO/PO molar ratio of 15/85 and a weight-average molecular weight of 6,000.

The "polyether polyol A1-3" was a three-functional polyether polyol having an EO/PO molar ratio of 15/85 and a weight-average molecular weight of 5,000.

The "polyether polyol A1-4" was a four-functional polyether polyol having an EO/PO molar ratio of 16/84 and a weight-average molecular weight of 7,000.

The "polymer polyol A2-1" was a 3.2-functional polymer polyol (commercially available from Sanyo Chemical Industries, Ltd., product name: KC855) having a solid content of 33%, a hydroxyl value of 23 mg KOH/g, and a weight-average molecular weight of 5400.

The "cross-linking agent C-1" was a commercially available cross-linking agent (product name: SC 490) having an EO/PO molar ratio of 0/100.

The "cross-linking agent C-2" was a commercially available polyether polyol (product name: polyether polyol E) having an EO/PO molar ratio of 100/0, a molecular weight of 400 and four functional groups.

The "cross-linking agent C-3" was glycerin.

The "cross-linking agent D-1" was a commercially available cross-linking agent (product name: FA103) having a molecular weight of 3400, f=3, EO%=70%, and a random EO/PO molar ratio.

The "cross-linking agent D-2" was a commercially available cross-linking agent (product name: M9185) having a molecular weight of 3400, f=6, EO%=82%, and a random EO/PO molar ratio.

The "cross-linking agent D-3" was a commercially available cross-linking agent (product name: FA153) having a molecular weight of 7,000, f=3, EO%=70%, and a random EO/PO molar ratio.

The "catalyst E-1" was an amine-based resin catalyst (commercially available from Air Products and Chemicals, Inc. product name: Dabco MP602).

The "catalyst E-2" was a commercially available resin catalyst that was 1,1 '-(3-(dimethylamino)propyl)imino)bis(2-propanol).

The "catalyst E-3" was a commercially available blowing catalyst that was bis[2-(dimethylamino)ethyl]ether (commercially available from Air Products and Chemicals, Inc., product name: Dabco NE300).

The "catalyst E-4" was a commercially available blowing catalyst (commercially available from Kao Corporation, product name: FARMIN DM1098) that was N,N-dimethyldodecylamine.

The "catalyst E-5" was a commercially available diethanolamine.

The "catalyst E-6" was TOYOCAT ET33B (commercially available from TOSHO Corporation).

The "catalyst E-7" was a commercially available triethylenediamine (33%) (product name: 33LV).

The "foam stabilizer F-1" was a low active type silicone-based foam stabilizer (product name: B8746) commercially available from Evonik.

The "foam stabilizer F-2" was a low active type silicone-based foam stabilizer (product name: B8734) commercially available from Evonik.

The "foam stabilizer F-3" was a high active type silicone-based foam stabilizer (product name: B8742) commercially available from Evonik.

The "foaming agent G-1" was water.

The "polyisocyanate (B-1)" was MDI-based isocyanate referred to as "NE135" commercially available from DOW. TDI-based isocyanate was not substantially contained.

The "polyisocyanate (B-2)" was isocyanate referred to as "WANNATE88001" commercially available from Wanhua Chemical Group Co., Ltd.

The "polyisocyanate (B-3)" was isocyanate referred to as "J243" commercially available from SBU.

In the "polyisocyanate (B-4)," isocyanate referred to as "44V20" commercially available from SBU and MDI-based isocyanate referred to as "NE135" commercially available from DOW were mixed at a ratio of 25 to 75.

In the "polyisocyanate (B-5)," isocyanate referred to as "44V20" commercially available from SBU and MDI-based isocyanate referred to as "NE135" commercially available from DOW were mixed at a ratio of 50 to 50. In the "polyisocyanate (B-6)," TDI (T-80) and MDI-based isocyanate referred to as "NE135" commercially available from DOW were mixed at a ratio of 10 to 90.

Configurations and combinations thereof in the embodiments described above are only examples, and additions, omissions, substitutions and other modifications of the configurations can be made without departing from the scope of the present invention. In addition, the present invention is not limited to the embodiments, but is only limited by the scope of the appended claims.

### [Industrial Applicability]

According to the present invention, the soft polyurethane foam of the present invention can be widely used as seat pads for vehicles. In addition, it is possible to provide a seat pad having seating comfort and a reliable feeling of stability and a soft polyurethane foam that can be used to implement the seat pad.

## Claims

1. A soft polyurethane foam that is obtained by foam molding a foaming stock solution containing a polyol, a polyisocyanate, a cross-linking agent, a foaming agent, and a catalyst in which:
a polyether polyol having a weight-average molecular weight (Mw) of 3,000 to 12,000 and having three to four functional groups is contained as the polyol;
a molar ratio of ethylene oxide groups/propylene oxide groups in all the compound contained as the cross-linking agent is 100 or more; and
diphenylmethane diisocyanate is contained in an isocyanate equivalent of 70 or more as the polyisocyanate.

2. The soft polyurethane foam according to Claim 1,
wherein at least a resin catalyst between the resin catalyst and a blowing catalyst is contained as the catalyst, and
wherein a mass ratio of the resin catalyst:the blowing catalyst is 100:0 to 100:100.

3. The soft polyurethane foam according to Claim 1 or 2,
wherein one type of a polyether polyol is included in the foaming stock solution and the number of functional groups of the polyether polyol is 3.5 or more.

4. The soft polyurethane foam according to any one of Claims 1 to 3,
wherein a polymer polyol is contained as the polyol.

5. The soft polyurethane foam according to any one of Claims 1 to 4,
wherein a stiffness distribution in a thickness direction of the soft polyurethane foam shows a continuously increasing trend or decreasing trend.

6. A seat pad in which the soft polyurethane foam according to any one of Claims 1 to 5 is used.

7. The soft polyurethane foam according to any one of Claims 1 to 6, further comprising
a communicating agent,
wherein a molar ratio of ethylene oxide groups/propylene oxide groups in all the compound contained as the communicating agent is 2 or more.
